# EUROPÄISCHE PATENTSCHRIFT

(11) **EP 3 626 952 B1**
(45) Veröffentlichungstag und Bekanntmachung des Hinweises auf die Patenterteilung: **10.03.2021**
(21) Anmeldenummer: 19197673.7
(22) Anmeldetag: 17.09.2019
(51) Int. Cl.: F02D 9/10, F02D 9/04, F16K 1/22, F16K 31/04, F16D 3/06

(54) **ABGASKLAPPE**
EXHAUST FLAP
CLAPET D'ÉCHAPPEMENT

(30) Priorität: 24.09.2018 DE 102018123400
(43) Veröffentlichungstag der Anmeldung: 25.03.2020
(73) Patentinhaber: Eberspächer Exhaust Technology GmbH & Co. KG, 66539 Neunkirchen (DE)
(72) Erfinder: Zeumer, Annika, 73249 Wernau (DE); Schmitt, Steffen, 73760 Ostfildern (DE); Wacker, Andreas, 73207 Plochingen (DE); Bahr, Dennis, 73207 Plochingen (DE); Grötzinger, Sven, 72622 Nürtingen (DE); Grün, Matthias, 73776 Altbach (DE)
(74) Vertreter: Ruttensperger Lachnit Trossin Gomoll

(56) Entgegenhaltungen:
- DE-A1-102015 202 211
- DE-A1-102016 203 794
- DE-A1-102017 105 889
- DE-B3-102014 113 332

## Beschreibung

Die vorliegende Erfindung betrifft eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende, einen Schwenkantrieb für die Schwenkwelle sowie eine die Schwenkwelle mit einer Antriebswelle des Schwenkantriebs zur gemeinsamen Drehung um die Schwenkachse koppelnde Kopplungsanordnung, wobei die Kopplungsanordnung einen mit der Antriebswelle in Drehkopplungsformschlusseingriff stehenden ersten Kopplungsbereich und einen mit der Schwenkwelle in Drehkopplungsformschlusseingriff stehenden zweiten Kopplungsbereich umfasst.

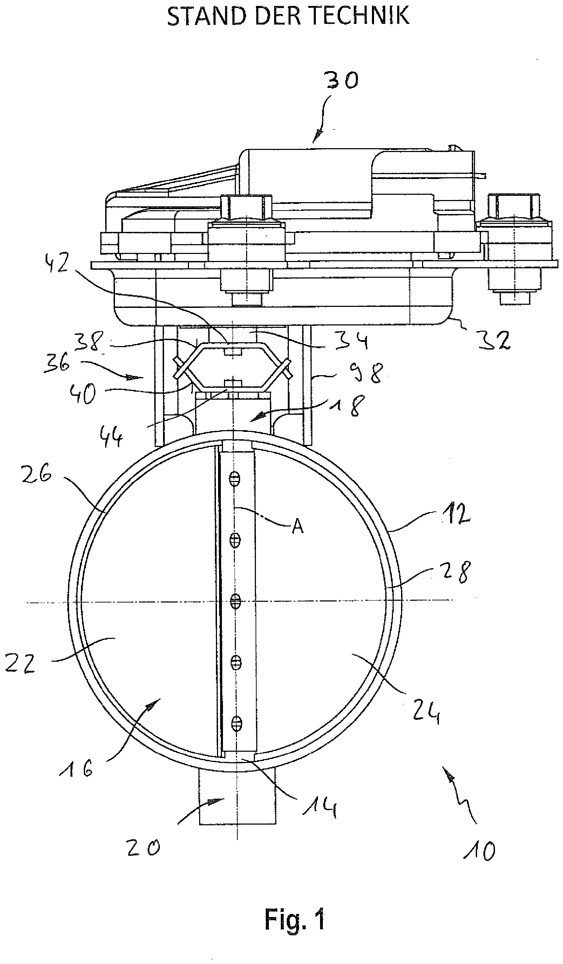

Eine derartige Abgasklappe ist aus der DE 10 2016 114 704 A1 bekannt. Diese in Fig. 1 dargestellte Abgasklappe 10 umfasst ein in eine Abgasanlage zu integrierendes Klappenrohr 12, welches einen beispielsweise kreisrunden Querschnitt aufweist und ein Gehäuse für eine an einer Schwenkwelle 14 um eine Schwenkachse A drehbar getragene Klappenblende 16 bereitstellt. Die Schwenkwelle 14 ist in ihren beiden aus dem Abgasrohr 12 hervorstehenden Endbereichen an jeweiligen Lagerungsansätzen 18 bzw. 20 um die Schwenkachse A drehbar getragen. Die an der Schwenkwelle 14 vorgesehene Klappenblende 16 weist zwei Blendenflügel 24 auf, die in dem in Fig. 1 dargestellten Schließzustand der Klappenblende in Anlage an jeweiligen Flügelanschlägen 26, 28 am Innenumfang des Klappenrohrs 12 sind und somit den Abgasströmungsweg durch das Klappenrohr 12 hindurch im Wesentlichen absperren. Bei Verdrehung der Klappenblende 16 um die Schwenkachse A ausgehend von dem in Fig. 1 dargestellten Schließzustand beispielsweise um etwa 90° sind die beiden Klappenflügel 22, 24 zur Abgasströmungsrichtung im Wesentlichen parallel ausgerichtet, so dass das Klappenrohr 12 im Wesentlichen ungehindert von Abgas durchströmt werden kann.

Am Klappenrohr 12 ist ein Schwenkantrieb 30 für die Klappenblende 16 getragen. Der Schwenkantrieb 30 umfasst einen in einem Gehäuse 32 untergebrachten Elektromotor. Eine aus dem Gehäuse 32 hervorstehende Antriebswelle 34 des Klappenantriebs 30 ist über eine allgemein mit 36 bezeichnete Kopplungsanordnung zur gemeinsamen Drehung mit der Schwenkwelle 14 gekoppelt und kann somit bei Erregung des Elektromotors die Klappenblende 16 um die Schwenkachse A drehen.

Die Kopplungsanordnung 36 umfasst zwei beispielsweise aus Federblech oder dergleichen gebogene Kopplungselemente 38, 40. Das Kopplungselement 38 stellt einen ersten Kopplungsbereich 42 bereit, in welchem die Kopplungsanordnung 36 in Drehkopplungsformschlusseingriff mit der Antriebswelle steht. Das Kopplungselement 40 stellt einen zweiten Kopplungsbereich 44 bereit, in welchem die Kopplungsanordnung 36 in Drehkopplungsformschlusseingriff mit der Schwenkwelle 14 steht. Die beiden Kopplungselemente 38, 40 greifen ferner in ihren beiden radial bezüglich der Schwenkachse A außen liegenden Bereichen ineinander ein und sind auf diese Art und Weise miteinander in Drehkopplungsformschlusseingriff und axial bezüglich einander abgestützt, so dass über diese axiale Abstützung und die dadurch generierte Vorspannung die Schwenkwelle 14 in Richtung von der Antriebswelle 34 weg vorgespannt ist und somit in einer definierten Positionierung in axialer Richtung bezüglich der Schwenkachse A gehalten ist.

Eine Abgasklappe gemäß dem Oberbegriff des Anspruchs 1 ist aus der DE 10 2014 113 332 B3 bekannt. Bei dieser bekannten Abgasklappe ist eine mit einer Antriebswelle und einer eine Klappenblende tragenden Schwenkwelle in Drehkopplungsformschlusseingriff stehende Kopplungsanordnung durch ein als Schraubendruckfeder ausgebildetes Vorspannorgan axial bezüglich der Schwenkwelle abgestützt und in Richtung auf die Antriebswelle zu vorgespannt.

Die DE 10 2017 105 889 A1, DE 10 2015 202 211 A1 und DE 10 2016 203 794 A1 offenbaren Abgasklappen, bei welchen jeweils zwei Bauteile einer eine Antriebswelle mit einer eine Klappenblende tragenden Schwenkwelle koppelnden Kopplungsanordnung durch ein zwischen diesen beiden Bauteilen wirkendes Vorspannorgan bezüglich einander vorgespannt sind.

Es ist die Aufgabe der vorliegenden Erfindung eine Abgasklappe vorzusehen, bei welcher eine definierte Positionierung der Antriebswelle bezüglich der Schwenkwelle gewährleistet ist.

Erfindungsgemäß wird diese Aufgabe gelöst durch eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende, einen Schwenkantrieb für die Schwenkwelle sowie eine die Schwenkwelle mit einer Antriebswelle des Schwenkantriebs zur gemeinsamen Drehung um die Schwenkachse koppelnde Kopplungsanordnung, wobei die Kopplungsanordnung einen mit der Antriebswelle in Drehkopplungsformschlusseingriff stehenden ersten Kopplungsbereich und einen mit der Schwenkwelle in Drehkopplungsformschlusseingriff stehenden zweiten Kopplungsbereich umfasst.

Diese Abgasklappe zeichnet sich aus durch ein bezüglich der Kopplungsanordnung einerseits und bezüglich einer Welle von Antriebswelle und Schwenkwelle andererseits abgestütztes Vorspannorgan, wobei durch das Vorspannorgan die Kopplungsanordnung in Richtung der Schwenkachse auf die andere Welle von Antriebswelle und Schwenkwelle zu axial vorgespannt ist und bezüglich der einen Welle von Antriebswelle und Schwenkwelle um die Schwenkachse vorgespannt ist.

Bei der erfindungsgemäß aufgebauten Abgasklappe sind die Funktion der Drehkopplung von Antriebswelle und Schwenkwelle einerseits und die Funktion der Erzeugung einer Vorspannkraft zur Herbeiführung einer definierten Positionierung der beiden Wellen andererseits voneinander baulich entkoppelt. Dies gestattet es, die zum Bereitstellen dieser Funktionen vorgesehenen Bauteile bzw. Baugruppen, nämlich die Kopplungsanordnung einerseits und das Vorspannorgan andererseits, für die durch diese zu erfüllenden Funktionen optimiert auszugestalten.

Für eine einfach zu realisierende, gleichwohl zuverlässig arbeitende Ausgestaltung umfasst das Vorspannorgan eine Schraubenfeder. Es ist darauf hinzuweisen, dass eine derartige Schraubenfeder nicht notwendigerweise mit in Richtung der Schwenkachse, welche im Wesentlichen auch einer Federlängsachse entspricht, konstantem Windungsradius aufgebaut sein muss. Die Schraubenfeder kann in Richtung der Federlängsachse einen variierenden Windungsradius aufweisen und somit auch einen nach Art einer Spiralfeder variierenden Verlauf der Federwindungen aufweisen.

Für eine definierte Anbindung an die eine Welle einerseits und die Kopplungsanordnung andererseits ist vorgesehen, dass das Vorspannorgan in einem ersten Verbindungsbereich bezüglich der einen Welle sich axial abstützend an die eine Welle in Umfangsrichtung um die Schwenkachse fest angekoppelt ist und in einem zweiten Verbindungsbereich bezüglich der Kopplungsanordnung sich axial abstützend an die Kopplungsanordnung in Umfangsrichtung um die Schwenkachse fest angekoppelt ist.

Dies kann insbesondere bei Ausgestaltung des Vorspannorgans als Schraubenfeder in einfacher Weise dadurch realisiert werden, dass der erste Verbindungsbereich einen in einem ersten axialen Endbereich des Vorspannorgans sich erstreckenden ersten Windungsendabschnitt umfasst, und dass der zweite Verbindungsbereich einen in einem zweiten axialen Endbereich des Vorspannorgans sich erstreckenden zweiten Windungsendabschnitt umfasst.

Das Vorspannorgan kann im ersten Windungsendabschnitt einen im Wesentlichen axial sich erstreckenden und in eine Verbindungsaussparung der einen Welle eingreifenden ersten Verbindungsvorsprung umfassen, und das Vorspannorgan kann im zweiten Windungsendabschnitt einen im Wesentlichen axial sich erstreckenden und in eine Verbindungsaussparung der Kopplungsanordnung eingreifenden zweiten Verbindungsvorsprung umfassen. Die Verbindungsvorsprünge können bei Ausgestaltung des Vorspannorgans als Schraubenfeder in besonders einfacher Weise durch axiales Abbiegen der Schraubenfeder in den Windungsendabschnitten bereitgestellt werden.

Um eine ausreichende Vorspannwirkung sowohl in axialer Richtung, als auch in Umfangsrichtung generieren zu können, kann das Vorspannorgan wenigstens eine, vorzugsweise eine Mehrzahl von Windungen umfassen.

Für eine stabile Drehkopplung der beiden Wellen miteinander wird vorgeschlagen, dass im ersten Kopplungsbereich die Kopplungsanordnung eine erste Formschluss-Eingriffsöffnung mit einer Eingriffsöffnung-Querschnittsgeometrie aufweist und die Antriebswelle ein in die erste Formschluss-Eingriffsöffnung eingreifendes Formschluss-Eingriffsende mit zur Eingriffsöffnung-Querschnittsgeometrie der ersten Formschluss-Eingriffsöffnung komplementärer Eingriffsende-Querschnittsgeometrie aufweist, und dass im zweiten Kopplungsbereich die Kopplungsanordnung eine zweite Formschluss-Eingriffsöffnung mit einer Eingriffsöffnung-Querschnittsgeometrie aufweist und die Schwenkwelle ein in die zweite Formschluss-Eingriffsöffnung eingreifendes Formschluss-Eingriffsende mit zur Eingriffsöffnung-Querschnittsgeometrie der zweiten Formschluss-Eingriffsöffnung komplementärer Eingriffsende-Querschnittsgeometrie aufweist. Besonders vorteilhaft ist dabei eine Ausgestaltung, bei welcher die verschiedenen Querschnittsgeometrien jeweils vieleckig ausgestaltet sind.

Um eine durch die Formgebung des Eingriffsendes der einen Welle ungehinderte axiale Vorspannung der Kopplungsanordnung in Richtung auf die andere Welle zu erzeugen zu können, wird vorgeschlagen, dass das Eingriffsende der einen Welle in Richtung der Schwenkachse im Wesentlichen zylindrisch ausgebildet ist, und dass das Eingriffsende der anderen Welle in Richtung der Schwenkachse auf die eine Welle zu sich verjüngend ausgebildet ist. Die im Wesentlichen zylindrische Ausgestaltung des Eingriffsendes der einen Welle ermöglicht, unabhängig von der jeweiligen beispielsweise vieleckigen Querschnittsgeometrie, eine im Wesentlichen ungehinderte axiale Verschiebbarkeit der einen Welle bezüglich der Kopplungsanordnung auch in dem Bereich, in welchem diese in Drehkopplungsformschlusseingriff miteinander stehen. Gleichwohl ist aufgrund der Vorspannung der einen Welle bezüglich der Kopplungsanordnung in Umfangsrichtung dafür gesorgt, dass diese spielfrei aneinander anliegen bzw. gegeneinander vorgespannt sind und somit bei Erzeugung einer Drehbewegung kein Totgang zwischen der einen Welle und der Kopplungsanordnung auftritt. Die sich verjüngende Ausgestaltung des Eingriffsendes der anderen Welle gewährleistet, dass durch die axiale Vorspannung der Kopplungsanordnung auf diese Welle zu ein in Umfangsrichtung spielfreier Eingriff zwischen der Kopplungsanordnung und der anderen Welle erzeugt wird.

Bei einer vorteilhaften Ausgestaltung kann vorgesehen sein, dass die eine Welle die Antriebswelle und die andere Welle die Schwenkwelle ist.

Für eine einfache Montage einer erfindungsgemäß aufgebauten Abgasklappe wird vorgeschlagen, dass die Kopplungsanordnung und das Vorspannorgan an der einen Welle gegen Loslösen von der einen Welle gesichert getragen sind, oder/und dass die Kopplungsanordnung durch das Vorspannorgan in eine Montagevorbereitungspositionierung an der einen Welle vorgespannt oder vorspannbar ist.

Zur Bereitstellung eines derartigen Zusammenhalt des in einer Montagevorbereitungspositionierung kann an der Kopplungsanordnung wenigstens ein in eine Arretieraussparung an der einen Welle eingreifender und in einer Montagevorbereitungspositionierung die Kopplungsanordnung an der einen Welle arretierender Arretiervorsprung vorgesehen sein.

Dabei kann zum Einführen des wenigstens einen Arretiervorsprungs in die Arretieraussparung an der einen Welle wenigstens eine Aufnahmeaussparung vorgesehen ist, wobei der Arretiervorsprung zur Aufnahme in der diesem zugeordneten Arretieraussparung durch die Aufnahmeaussparung hindurch bewegbar ist.

Die den wenigstens einen Arretiervorsprung aufnehmende Arretieraussparung und die zur Hindurchbewegung des Arretiervorsprungs vorgesehene Aufnahmeaussparung in Umfangsrichtung können um die Schwenkachse zueinander versetzt sein. Ferner kann vorgesehen sein, dass der wenigstens eine Arretiervorsprung in der diesen aufnehmenden Arretieraussparung und der zur Hindurchbewegung des Arretiervorsprungs vorgesehenen Aufnahmeaussparung im Wesentlichen in Richtung der Schwenkachse verschiebbar ist.

Für einen einfach zu realisierenden, gleichwohl stabilen Aufbau kann die Kopplungsanordnung ein im ersten Kopplungsbereich und im zweiten Kopplungsbereich im Wesentlichen plattenartig ausgebildetes und zur Schwenkachse im Wesentlichen orthogonal ausgerichtetes Kopplungselement umfassen. Beispielsweise kann dabei insbesondere bei einer einstückigen und somit leicht zu realisierenden Ausgestaltung der Kopplungsanordnung in wenigstens einem der Kopplungsbereiche die Kopplungsanordnung einander überlappend angeordnete Kopplungselement-Endbereiche aufweist.

Die vorliegende Erfindung wird nachfolgend mit Bezug auf die beiliegenden Figuren detailliert beschrieben. Es zeigt:
- Fig. 1: eine aus dem Stand der Technik bekannte Abgasklappe;
- Fig. 2: eine perspektivische Darstellung einer mit einer Schwenkwelle gekoppelten Antriebswelle eines Klappenantriebs;
- Fig. 3: eine der Fig. 2 entsprechende Ansicht, betrachtet aus einer anderen Perspektive;
- Fig. 4: eine weitere der Fig. 2 entsprechende Ansicht, betrachtet aus einer anderen Perspektive;
- Fig. 5: in perspektivischer Detailansicht die mit einer Schwenkwelle zur gemeinsamen Drehung gekoppelte Antriebswelle eines Schwenkantriebs.

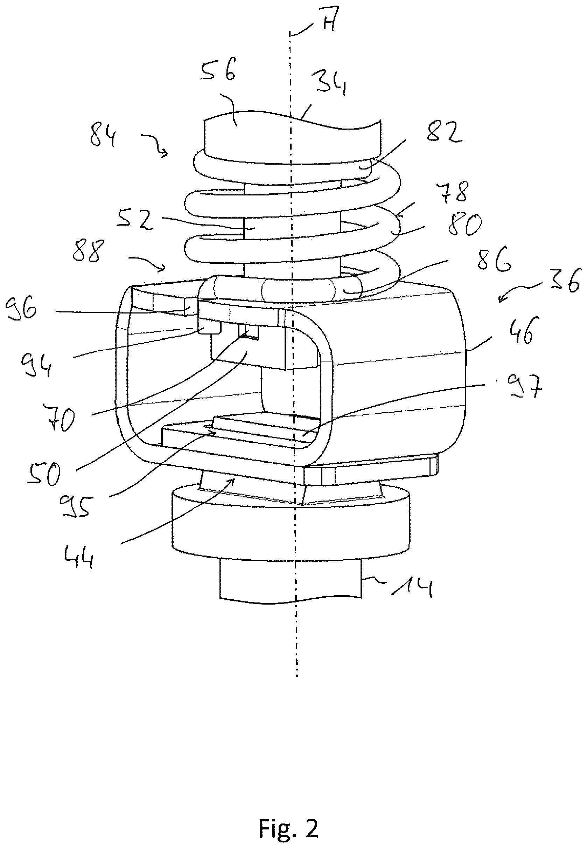

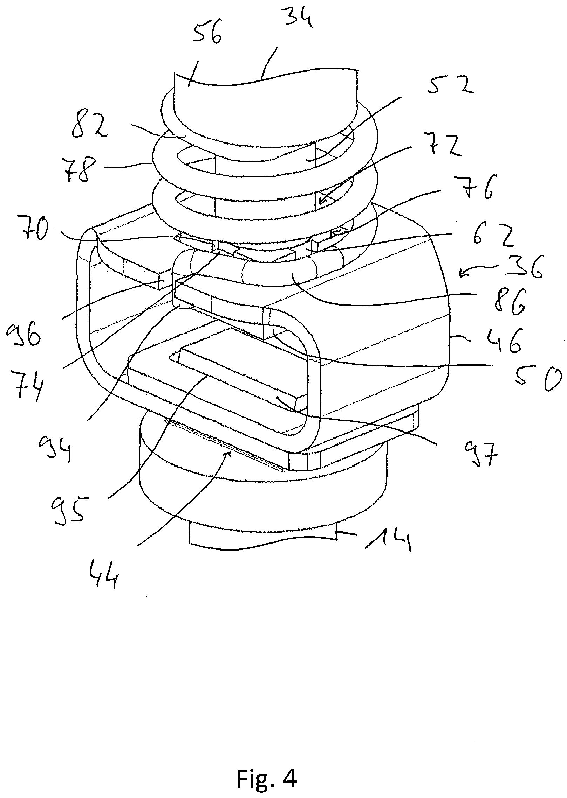

Nachfolgend wird mit Bezug auf die Fig. 2 bis 5 der Aufbau einer erfindungsgemäß ausgestalteten Abgasklappe 10 beschrieben. Es ist dabei zu betonen, dass hinsichtlich des grundsätzlichen Aufbaus beispielsweise des Klappenrohrs und der darin angeordneten Klappenblende und des Klappenantriebs für die Klappenblende der erfindungsgemäße Aufbau dem vorangehend mit Bezug auf die Fig. 1 beschriebenen und in Fig. 1 erkennbaren Aufbau entsprechen kann. Es wird daher auch hinsichtlich der erfindungsgemäßen Ausgestaltung einer Klappenblende diesbezüglich auf die voranstehenden Erläuterungen zur Fig. 1 verwiesen.

Die Fig. 2 bis 5 zeigen die gemäß den Prinzipien der vorliegenden Erfindung realisierte Kopplung der Antriebswelle 34 mit der Schwenkwelle 14 zur gemeinsamen Drehung um die Schwenkachse A.

Die Kopplungsanordnung 36 umfasst ein beispielsweise aus einem Blechstreifen gebogenes Kopplungselement 46 mit jeweils den ersten Kopplungsbereich 42 bzw. den zweiten Kopplungsbereich 44 bereitstellenden, plattenartigen und zur Schwenkachse A im Wesentlichen orthogonal orientierten Bereichen. Man erkennt, dass zur Bereitstellung des zweiten Kopplungsbereichs 44 die beiden Endabschnitte des zur Aufbau des Kopplungselements 42 eingesetzten Blechstreifens einander überlappend angeordnet sind.

Im ersten Kopplungsbereich 42 weist das Kopplungselement 46 eine erste Formschluss-Eingriffsöffnung 48 mit einer vieleckigen, im dargestellten Ausgestaltungsbeispiel insbesondere viereckigen bzw. quadratischen Eingriffsöffnung-Querschnittsgeometrie auf. Die Antriebswelle 34 weist in Zuordnung zum ersten Kopplungsbereich 42 ein Formschluss-Eingriffsende 50 mit zur Eingriffsöffnung-Querschnittsgeometrie der ersten Formschluss-Eingriffsöffnung 40 komplementärer Eingriffsende-Querschnittsgeometrie auf. Dies bedeutet, dass auch das Formschluss-Eingriffsende 50 im dargestellten Beispiel eine quadratische Querschnittsgeometrie aufweist, die so geformt und dimensioniert ist, dass grundsätzlich das Formschluss-Eingriffsende 50 der Antriebswelle 34 sich in Richtung der Schwenkachse A in der ersten Formschluss-Eingriffsöffnung 48 verschieben kann. Zu diesem Zweck ist das Formschluss-Eingriffsende 50 mit im Wesentlichen zylindrischer, also in Richtung der Schwenkachse sich hinsichtlich seiner Querschnittsabmessung nicht verändernder Querschnittsgeometrie ausgebildet. In einem an das Formschluss-Eingriffsende 50 anschließenden Verbindungsabschnitt 52 weist die Antriebswelle 34 eine beispielsweise kreisrunde Querschnittsgeometrie mit gegenüber dem Formschluss-Eingriffsende verringerter Querschnittsabmessung auf. Der Verbindungsabschnitt 52 geht an einem stufenartigen Erweiterungsbereich 54 in einen beispielsweise aus dem Gehäuse 32 des Schwenkantriebs 20 hervorstehenden Körperbereich 56 der Antriebswelle 34 über.

An einander gegenüberliegenden Seitenflächen 58, 60 sind im Formschluss-Eingriffsende 50 der Antriebswelle 34 in Richtung der Schwenkachse A sich durch den gesamten Erstreckungsbereich des Formschluss-Eingriffsendes 50 hindurch erstreckende Einführnuten 62, 64 vorgesehen. An den beiden anderen einander gegenüberliegenden Seitenflächen 66, 68 des Formschluss-Eingriffsendes 50 der Antriebswelle 34 sind nur über einen Teilbereich des Formschluss-Eingriffsendes 50 sich erstreckende, insbesondere in Richtung vom Körperbereich 56 der Antriebswelle 34 weg abgeschlossene Arretiernuten 70, 72 vorgesehen.

Am Kopplungselement 46 sind im Bereich der ersten Formschluss-Eingriffsöffnung an einander gegenüberliegenden Umfangsbereichen nach radial innen vorstehende Arretiervorsprünge 74, 76 vorgesehen. Deren Wechselwirkung mit den Einführnuten 62, 64 und den Arretiernuten 70, 72 wird nachfolgend beschrieben.

In Zuordnung zu dem Kopplungselement 46 ist ein als Schraubenfeder ausgebildetes Vorspannorgan 78 vorgesehen. Das Vorspannorgan 78 ist mit einer Mehrzahl von Windungen 80 um die Schwenkachse A gewunden ausgebildet und weist im dargestellten Ausgestaltungsbeispiel einen näherungsweise konstanten Windungsradius auf. Mit einem ersten Windungsendabschnitt 82 stützt in einem ersten axialen Endbereich 84 das Vorspannorgan 78 sich an der stufenartigen Erweiterung 54 der Antriebswelle 34 ab. Mit einem zweiten Windungsendabschnitt 86 stützt in einem zweiten axialen Endbereich 88 das Vorspannorgan 78 sich am Kopplungselement 46 im Bereich des ersten Kopplungsbereichs 42 ab. Im ersten Windungsendabschnitt 82 endet das Kopplungsorgan 78 mit einem beispielsweise durch Umbiegen erzeugten und im Wesentlichen axial sich erstreckenden Verbindungsvorsprung 90, der in eine zugeordnete Verbindungsaussparung 92, beispielsweise eine im Bereich der stufenartigen Erweiterung 56 gebildete, axial offene Öffnung der Antriebswelle 34 eingreift. Auf diese Art und Weise ist im ersten axialen Endbereich 84 das Vorspannorgan 82 in Umfangsrichtung bezüglich der Schwenkachse A bezüglich der Antriebswelle 34 festgehalten und axial daran abgestützt. In entsprechender Weise ist im zweiten Windungsendabschnitt ein beispielsweise gleichermaßen durch axiales Umbiegen generierter zweiter Verbindungsvorsprung 94 vorgesehen, der in eine im Kopplungselement 46 im ersten Kopplungsbereich 42 vorgesehene Verbindungsaussparung 96 eingreift und auf diese Art und Weise für eine in Umfangsrichtung um die Schwenkachse A feste Verbindung des Vorspannorgans 78 mit dem Kopplungselement 46 sorgt.

Beim Zusammenbau der Antriebswelle 34 mit dem Kopplungselement 46 und dem Vorspannorgan 78 wird zunächst das Vorspannorgan 78 axial über das Formschluss-Eingriffsende 50 und den Verbindungsabschnitt 52 der Antriebswelle 34 geführt, bis der erste Windungsendabschnitt 82 an der stufenartigen Erweiterung 54 anliegt und der erste Verbindungsvorsprung 90 in die erste Verbindungsaussparung 92 eingreift. Das Vorspannorgan 78 kann derart dimensioniert sein, dass in diesem noch entspannten Zustand des Vorspannorgans 78 der zweite axiale Endbereich 88 axial über das Formschluss-Eingriffsende 50 zumindest mit seinem zweiten Verbindungsvorsprung 94 hervorsteht.

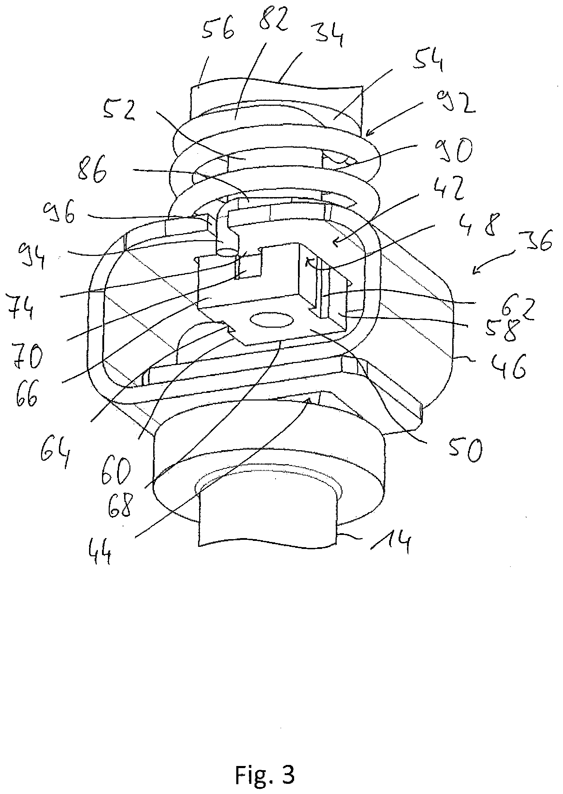

Es wird dann das Kopplungselement 46 axial an das Formschluss-Eingriffsende 50 der Antriebswelle 34 herangeführt, und zwar in derartiger Positionierung, dass die beiden Arretiervorsprünge 74, 76 näherungsweise mit den Aufnahmenuten 62, 64 ausgerichtet sind bzw. in diese eingeführt werden können. Vor dem Einführen der Arretiervorsprünge 74, 76 in die Aufnahmenuten 62, 64 wird beispielsweise durch entsprechende Dreh- und Verschiebebewegung des Kopplungselements 46 der zweite Verbindungsvorsprung 94 in die zweite Verbindungsaussparung 96 eingeführt. Dabei kann zum Ausrichten der Arretiervorsprünge 74, 76 mit den Aufnahmenuten 62, 64 dann eine Drehung des Kopplungselements 46 bezüglich der Antriebswelle 34 erforderlich sein, wobei im Zuge dieser Drehbewegung das Vorspannorgan 78 durch Relativdrehung der beiden Windungsendabschnitte 82, 86 bezüglich einander um die Schwenkachse A verwunden und dabei gespannt wird. Dabei kann beispielsweise diese Verwindung in derartigem Sinne erfolgen, dass beispielsweise in der Darstellung der Fig. 3 das Kopplungselement 46 im Uhrzeigersinn bezüglich der Antriebswelle 34 gedreht wird, also der zweite Kopplungsvorsprung 94 in der Darstellung der Fig. 3 weiter nach links bewegt wird.

In diesem Zustand werden dann die Arretiervorsprünge 74, 76 in die Aufnahmenuten 62, 64 eingeführt, beispielsweise derart, dass der Arretiervorsprung 74 in der Aufnahmenut 62 aufgenommen wird und der Arretiervorsprung 76 in der Aufnahmenut 64 aufgenommen wird. Das Kopplungselement 46 wird dann axial in Richtung auf die stufenartige Erweiterung 54 zu geschoben, bis die Arretiervorsprünge 76, 76 vollständig durch die Aufnahmenuten 62, 64 hindurchgeführt sind und an deren der stufenartigen Erweiterung 54 nahen Enden aus diesen austreten.

Daraufhin wird das Kopplungselement 46 erneut bezüglich des Formschluss-Eingriffsendes 50 verdreht, vorzugsweise wieder in der gleichen Drehrichtung, wie bereits vorangehend beschrieben, so dass das Vorspannorgan 78 weiter gespannt wird. Diese Drehung erfolgt näherungsweise um 90°, so dass der Arretiervorsprung 74 in Umfangsrichtung dann mit der Arretieraussparung 70 ausgerichtet ist und der Arretiervorsprung 76 mit der Arretieraussparung 72 ausgerichtet ist. Daraufhin wird das Kopplungselement 46 unter axialer Entspannung des Vorspannorgans 78 axial in Richtung von der stufenartigen Erweiterung 54 der Antriebswelle 34 weg bewegt, bis die Arretiervorsprünge 74, 76 die axialen Enden der Arretieraussparungen 70, 72 erreichen und dort am Formschluss-Eingriffsende 50 der Antriebswelle 34 axial festgehalten sind.

In dem vorangehend beschriebenen Zustand ist grundsätzlich durch die Verschiebbarkeit der Arretiervorsprünge 74, 76 in den Arretieraussparungen 70, 72 und auch die zylindrische Ausgestaltung des Formschluss-Eingriffsendes 50 der Antriebswelle 34 das Kopplungselement 46 in Richtung der Schwenkachse A bezüglich der Antriebswelle 34 gegen die Vorspannwirkung des Vorspannorgans 78 verschiebbar. Weiter ist durch die auch in Umfangsrichtung erzeugte Vorspannung des Vorspannorgans 78 das Kopplungselement 46 der Kopplungsanordnung 36 in Umfangsrichtung bezüglich der Antriebswelle 34 vorgespannt, so dass eine stabile, keinen Totgang aufweisende Anlage des Formschluss-Eingriffsendes 50 am ersten Kopplungsbereich 42 der Kopplungsanordnung 36 gewährleistet ist.

Im zweiten Kopplungsbereich 44 weist das Kopplungselement 46 in seinen überlappend angeordneten Endabschnitten eine zweite Formschluss-Eingriffsöffnung 95 auf. Auch diese kann eine vieleckige, beispielsweise rechteckige Querschnittsgeometrie aufweisen. In die zweite Formschluss-Eingriffsöffnung 95 greift die Schwenkwelle 14 mit einem Formschluss-Eingriffsende 97 ein, das eine zur Eingriffsöffnung-Querschnittsgeometrie der zweiten Formschluss-Eingriffsöffnung 95 komplementäre Eingriffsende-Querschnittsgeometrie aufweist, also beispielsweise auch eine rechteckige Querschnittsgeometrie aufweist. Weiter ist die Schwenkwelle 14 in ihrem Formschluss-Eingriffsende 97 sich verjüngend ausgebildet, so dass insbesondere bei der dargestellten vieleckigen Ausgestaltung eine pyramidenartige bzw. pyramidenstumpfartige Gestalt des Formschluss-Eingriffsendes 97 vorgesehen ist.

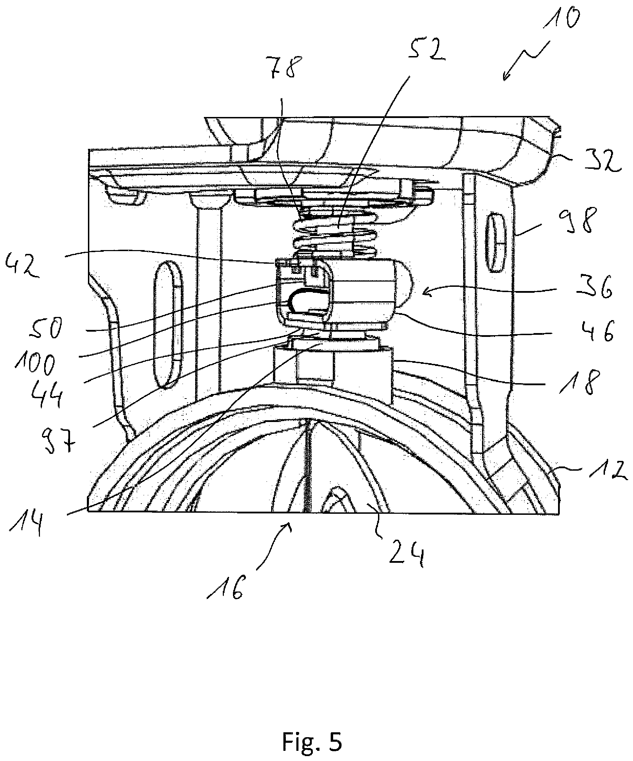

Beim Zusammenbau der Abgasklappe 10 wird beim Anbringen des Schwenkantriebs 30 am Klappenrohr 12 der Schwenkantrieb 28 mit der in der vorangehend beschriebenen Art und Weise an der Antriebswelle 34 desselben angebrachten Kopplungsanordnung 36 in Richtung der Schwenkachse A auf das Klappenrohr 12 und somit die Schwenkwelle 14 zu bewegt. Im Zuge dieser Bewegung tritt das Formschluss-Eingriffsende 97 der Schwenkwelle 14 in die zweite Formschluss-Eingriffsöffnung 95 des Kopplungselements 46 ein. Eine zur Festlegung des Schwenkantriebs 30 am Klappenrohr 12 vorgesehene und in Fig. 5 auch erkennbare Trägerstruktur 98 ist so dimensioniert, dass zur Erlangung der für die Montage vorgesehenen Endposition das Vorspannorgan 78 in Richtung der Schwenkachse A komprimiert werden muss, wenn im Zuge der axialen Aufeinanderzubewegung der zweite Kopplungsbereich 44 in axialer Anlage an dem sich verjüngend ausgebildeten Formschluss-Eingriffsende 97 der Schwenkwelle 14 kommt. Dies bedeutet, dass in der fertigen Montagepositionierung durch das Vorspannorgan 78 die Kopplungsanordnung 36, also das Kopplungselement 46, mit dem zweiten Kopplungsbereich 44 axial gegen das Formschluss-Eingriffsende 97 der Schwenkwelle 14 vorgespannt ist und somit aufgrund dessen sich verjüngender Ausgestaltung dafür gesorgt ist, dass auch ein in Umfangsrichtung spielfreier Zusammenhalt zwischen der Schwenkwelle 14 und dem Kopplungselement 46 erreicht ist. Nachfolgend kann über die Trägerstruktur 98 der Schwenkantrieb 30 am Klappenrohr 12 festgelegt werden, beispielsweise dadurch, dass die zuvor bereits am Klappenrohr 12 beispielsweise durch Verschweißung festgelegte Trägerstruktur 98 dann am Gehäuse 32 des Schwenkantriebs 30 festgelegt wird, beispielsweise durch Formschlusseingriff nach Art eines Bajonettverschlusses oder/und durch Verschweißung.

In der vorangehend beschriebenen Art und Weise wird eine Kopplung der Antriebswelle 34 mit der Schwenkwelle 14 realisiert, bei welcher einerseits in jedem der beiden Kopplungsbereiche 42, 44 der Kopplungsanordnung 36 durch die vermittels des Vorspannorgans 78 erzeugte axiale Vorspannung und die vermittels des Vorspannorgans 78 erzeugte Umfangsvorspannung jedweder Totgang in Umfangsrichtung vermieden wird und weiterhin eine definierte axiale Positionierung der Schwenkwelle 14 bezüglich des Klappenrohrs 12 gewährleistet ist. Die Kopplungsanordnung 36, also deren Kopplungselement 46 selbst, erfüllt dabei lediglich die Funktionalität der Bereitstellung einer Drehkopplung zwischen den beiden Wellen 34, 14, liefert selbst aber keinen substantiellen Beitrag zur Erzeugung insbesondere einer axialen Vorspannkraft. Dadurch werden nicht nur die beiden Wellen 14, 34 in Umfangsrichtung und axial definierter Positionierung bezüglich einander gehalten, sondern es können auch Bauteil- und Montagetoleranzen kompensiert werden. Auch wird eine deutliche thermische Entkopplung der beiden Wellen 14, 34 voneinander gewährleistet, da jede dieser beiden Wellen 14, nur dort, wo sie das Kopplungselement 46 berührt, mit diesem in Wärmeübertragungskontakt steht und da weiterhin das Kopplungselement 46 zusätzlich nur über das Vorspannorgan 78 in thermischem Kontakt mit der Antriebswelle 34 ist. Auch wird eine hohe mechanische Festigkeit der zur Kopplung vorgesehenen Baugruppe und eine gute Resistenz gegen äußere Einflüsse, insbesondere gegen Korrosion, erreicht. Ferner ermöglicht die in Richtung der Schwenkachse vorhandene Bewegungsentkopplung der beiden Wellen 14, 34 bezüglich einander thermisch induzierte Relativbewegungen, ohne dass in irgendwelchen Lagerungsbereichen Zwängungen entstehen.

Zur weiteren Verbesserung der thermischen Entkopplung kann ein in Fig. 5 erkennbares beispielsweise am Kopplungselement 46 gehaltenes Wärmestrahlung-Abschirmelement 100, beispielsweise aus Blechmaterial gebildet, zwischen den einander gegenüberliegenden Enden der beiden Wellen 14, 34 liegen und somit diese auch gegen Wärmeübertragung durch Strahlung bezüglich einander abschirmen.

Sowohl für die axiale Vorspannung der Kopplungsanordnung 36 gegen die Schwenkwelle 14, als auch die Umfangsvorspannung der Kopplungsanordnung 36 bezüglich der Antriebswelle 34 sorgt ausschließlich das in besonders vorteilhafter Weise als Schraubenfeder ausgebildete Vorspannorgan 78.

Es sei abschließend darauf hingewiesen, dass selbstverständlich auch eine Ausgestaltung realisierbar ist, bei welcher das Vorspannorgan zwischen der Schwenkwelle 14 und dem Kopplungselement 46 wirkt und durch das Vorspannorgan 78 das Kopplungselement 46 gegen das Formschluss-Eingriffsende 50 der Antriebswelle 34 vorgespannt ist. Bei derartiger Ausgestaltung wäre dann die jeweilige Formgebung der Formschluss-Eingriffsenden der beiden Wellen 34,14 gegeneinander zu tauschen, so dass in einem Vormontagezustand das Kopplungselement 46 und mit diesem das Vorspannorgan 78 mit der Schwenkwelle 14 vormontiert ist und bei der Endmontage die Antriebswelle 34 dann in Formschlusseingriff mit dem dieser zugeordneten ersten Kopplungsbereich 42 des Kopplungselements 46 gebracht wird. Ferner wird darauf hingewiesen, dass beispielsweise die Schwenkwelle 14 mehrstückig aufgebaut sein kann und einen am Klappenrohr 12 schwenkbar getragenen und die Blendenflügel 22, 24 tragenden Wellenabschnitt sowie einen das Formschluss-Eingriffsende 97 bereitstellenden, als separates Bauteil ausgebildeten Wellenabschnitt aufweisen kann. Alternativ kann die Schwenkwelle 14 selbstverständlich mit allen funktionalen Abschnitten derselben einstückig ausgebildet sein.

Bei einer baulich einfach zu realisierenden Ausgestaltung kann der Zusammenhalt des Kopplungselements 46 mit der Antriebswelle 34 durch das Vorspannorgan 78 selbst realisiert sein. Hierzu können dessen Windungsendabschnitte 82, 86 mit der Antriebswelle 34 einerseits und der Schwenkwelle 14 andererseits auch axial fest verbunden sein, beispielsweise durch Formschluss oder/und Materialschluss. Zum Aufschieben des Kopplungselements 46 auf das Formschluss-Eingriffsende 50 der Antriebswelle 34 muss das Vorspannorgan 78 in axialer Richtung gedehnt werden, so dass das Formschluss-Eingriffsende 50 und die Formschluss-Eingriffsöffnung 48 unter Erzeugung einer Torsionsspannung des Vorspannorgans 78 zueinander ausgerichtet werden. Bei dann zugelassener axialer Entspannung des Vorspannorgans 78 wird das Kopplungselement 46 auf das Formschluss-Eingriffsende 50 gezogen. Im in axialer Richtung entspannten Zustand des Vorspannorgans 78 liegt der erste Kopplungsbereich 42 dann im axialen Bereich des Formschluss-Eingriffsendes 50, wobei dieses durch die erzeugte Torsionsspannung des Vorspannorgans 78 in Umfangsrichtung bezüglich des Kopplungselements 46 vorgespannt ist. Beim Zusammenbau mit der Schwenkwelle 14 erfolgt dann eine axiale Kompression des Vorspannorgans 78, so dass das Kopplungselement 46 axial gegen das Formschluss-Eingriffsende 97 der Schwenkwelle 14 vorgespannt wird, mit seinem ersten Kopplungsbereich 42 jedoch in Eingriff mit dem Formschluss-Eingriffsende 50 der Antriebswelle 30 bleibt. Auf das Vorsehen der Arretieraussparungen kann bei dieser Ausgestaltung verzichtet werden.

## Patentansprüche

1. Abgasklappe, insbesondere für den Abgasstrom einer Brennkraftmaschine, umfassend:
- ein Klappenrohr (12),
- eine im Inneren des Klappenrohrs (12) an einer um eine Schwenkachse (A) drehbaren Schwenkwelle (14) getragene Klappenblende (16), einen Schwenkantrieb (30) für die Schwenkwelle (14),
- eine die Schwenkwelle (14) mit einer Antriebswelle (34) des Schwenkantriebs (29) zur gemeinsamen Drehung um die Schwenkachse (A) koppelnde Kopplungsanordnung (36), wobei die Kopplungsanordnung (36) einen mit der Antriebswelle (34) in Drehkopplungsformschlusseingriff stehenden ersten Kopplungsbereich (42) und einen mit der Schwenkwelle (14) in Drehkopplungsformschlusseingriff stehenden zweiten Kopplungsbereich (44) umfasst,
- ein bezüglich der Kopplungsanordnung (36) einerseits und bezüglich einer Welle von Antriebswelle (34) und Schwenkwelle (14) andererseits abgestütztes Vorspannorgan (78), wobei das Vorspannorgan (78) eine Schraubenfeder umfasst und durch das Vorspannorgan (78) die Kopplungsanordnung (36) in Richtung der Schwenkachse (A) auf die andere Welle von Antriebswelle (34) und Schwenkwelle (14) zu axial vorgespannt ist,
**dadurch gekennzeichnet,**
**dass** die Kopplungsanordnung (36) durch das Vorspannorgan (78) bezüglich der einen Welle von Antriebswelle (34) und Schwenkwelle (14) um die Schwenkachse (A) vorgespannt ist, und
**dass** das Vorspannorgan (78) in einem ersten Verbindungsbereich bezüglich der einen Welle sich axial abstützend an die eine Welle in Umfangsrichtung um die Schwenkachse (A) fest angekoppelt ist und in einem zweiten Verbindungsbereich bezüglich der Kopplungsanordnung (36) sich axial abstützend an die Kopplungsanordnung (36) in Umfangsrichtung um die Schwenkachse (A) fest angekoppelt ist.

2. Abgasklappe nach Anspruch 1, **dadurch gekennzeichnet, dass** der erste Verbindungsbereich einen in einem ersten axialen Endbereich (84) des Vorspannorgans (76) sich erstreckenden ersten Windungsendabschnitt (82) umfasst, und dass der zweite Verbindungsbereich einen in einem zweiten axialen Endbereich (88) des Vorspannorgans (78) sich erstreckenden zweiten Windungsendabschnitt (86) umfasst.

3. Abgasklappe nach Anspruch 2, **dadurch gekennzeichnet, dass** das Vorspannorgan (78) im ersten Windungsendabschnitt (82) einen im Wesentlichen axial sich erstreckenden und in eine Verbindungsaussparung (92) der einen Welle eingreifenden ersten Verbindungsvorsprung (90) umfasst, und dass das Vorspannorgan (78) im zweiten Windungsendabschnitt (86) einen im Wesentlichen axial sich erstreckenden und in eine Verbindungsaussparung (96) der Kopplungsanordnung (36) eingreifenden zweiten Verbindungsvorsprung (94) umfasst.

4. Abgasklappe nach einem der Ansprüche 1-3, **dadurch gekennzeichnet, dass** das Vorspannorgan (78) wenigstens eine, vorzugsweise eine Mehrzahl von Windungen (80) umfasst.

5. Abgasklappe nach einem der vorangehenden Ansprüche, **dadurch gekennzeichnet, dass** im ersten Kopplungsbereich (42) die Kopplungsanordnung (36) eine erste Formschluss-Eingriffsöffnung (48) mit einer Eingriffsöffnung-Querschnittsgeometrie aufweist und die Antriebswelle (34) ein in die erste Formschluss-Eingriffsöffnung (48) eingreifendes Formschluss-Eingriffsende (50) mit zur Eingriffsöffnung-Querschnittsgeometrie der ersten Formschluss-Eingriffsöffnung (48) komplementärer Eingriffsende-Querschnittsgeometrie aufweist, und dass im zweiten Kopplungsbereich (44) die Kopplungsanordnung (36) eine zweite Formschluss-Eingriffsöffnung (95) mit einer Eingriffsöffnung-Querschnittsgeometrie aufweist und die Schwenkwelle (14) ein in die zweite Formschluss-Eingriffsöffnung (95) eingreifendes Formschluss-Eingriffsende (96) mit zur Eingriffsöffnung-Querschnittsgeometrie der zweiten Formschluss-Eingriffsöffnung (95) komplementärer Eingriffsende-Querschnittsgeometrie aufweist.

6. Abgasklappe nach Anspruch 5, **dadurch gekennzeichnet, dass** das Formschluss-Eingriffsende (50) der einen Welle in Richtung der Schwenkachse (A) im Wesentlichen zylindrisch ausgebildet ist, und dass das Formschluss-Eingriffsende (96) der anderen Welle in Richtung der Schwenkachse (A) auf die eine Welle zu sich verjüngend ausgebildet ist.

7. Abgasklappe nach einem der vorangehenden Ansprüche, **dadurch gekennzeichnet, dass** die Kopplungsanordnung (36) und das Vorspannorgan (78) an der einen Welle gegen Loslösen von der einen Welle gesichert getragen sind, oder/und dass die Kopplungsanordnung (36) durch das Vorspannorgan (78) in eine Montagevorbereitungspositionierung an der einen Welle vorgespannt oder vorspannbar ist.

8. Abgasklappe nach einem der vorangehenden Ansprüche, **dadurch gekennzeichnet, dass** an der Kopplungsanordnung (36) wenigstens ein in eine Arretieraussparung (70, 72) an der einen Welle eingreifender und in einer Montagevorbereitungspositionierung die Kopplungsanordnung (36) an der einen Welle arretierender Arretiervorsprung (74, 76) vorgesehen ist.

9. Abgasklappe nach Anspruch 8, **dadurch gekennzeichnet, dass** an der einen Welle wenigstens eine Aufnahmeaussparung (62, 64) vorgesehen ist, wobei der Arretiervorsprung (76, 76) zur Aufnahme in der diesem zugeordneten Arretieraussparung (70, 72) durch die Aufnahmeaussparung (62, 64) hindurch bewegbar ist.

10. Abgasklappe nach Anspruch 9, **dadurch gekennzeichnet, dass** die den wenigstens einen Arretiervorsprung (74, 76) aufnehmende Arretieraussparung (70, 72) und die zur Hindurchbewegung des Arretiervorsprungs (74, 76) vorgesehene Aufnahmeaussparung (62, 64) in Umfangsrichtung um die Schwenkachse (A) zueinander versetzt sind, oder/und dass der wenigstens eine Arretiervorsprung (74, 76) in der diesen aufnehmenden Arretieraussparung (70, 72) und der zur Hindurchbewegung des Arretiervorsprungs (74, 76) vorgesehenen Aufnahmeaussparung (62, 64) im Wesentlichen in Richtung der Schwenkachse (A) verschiebbar ist.

11. Abgasklappe nach einem der vorangehenden Ansprüche, **dadurch gekennzeichnet, dass** die eine Welle die Antriebswelle (34) und die andere Welle die Schwenkwelle (14) ist.

12. Abgasklappe nach einem der vorangehenden Ansprüche, **dadurch gekennzeichnet, dass** die Kopplungsanordnung (36) ein im ersten Kopplungsbereich (42) und im zweiten Kopplungsbereich (44) im Wesentlichen plattenartig ausgebildetes und zur Schwenkachse (A) im Wesentlichen orthogonal ausgerichtetes Kopplungselement (46) umfasst.

13. Abgasklappe nach Anspruch 12, **dadurch gekennzeichnet, dass** in wenigstens einem der Kopplungsbereiche (42, 44) die Kopplungsanordnung (36) einander überlappend angeordnete Kopplungselement-Endbereiche aufweist.

## Claims

1. Exhaust gas flap, especially for the exhaust gas stream of an internal combustion engine, comprising:
- a flap tube (12),
- a flap diaphragm (16), which is carried in the interior of the flap tube (12) on a pivot shaft (14) rotatable about a pivot axis (A), a pivot drive (30) for the pivot shaft (14),
- a coupling device (36) coupling the pivot shaft (14) to a drive shaft (34) of the pivot drive (29) for joint rotation about the pivot axis (A), the coupling device (36) comprising a first coupling area (42) that is in a state of rotary coupling positive-locking meshing with the drive shaft (34) and a second coupling area (44) that is in a state of rotary coupling positive-locking meshing with the pivot shaft (14),
- a prestressing element (78), which is supported in relation to the coupling device (36), on the one hand, and in relation to one shaft of the drive shaft (34) and the pivot shaft (14), on the other hand, wherein the prestressing element (78) comprises a coil spring and the coupling device (36) is axially prestressed by the prestressing element (78) in the direction of the pivot shaft (14) towards the other shaft of the drive shaft (34) and the pivot shaft (14),
**characterized in that**
the coupling device (36) is prestressed by the prestressing element (78) about the pivot axis (A) in relation to the one shaft of the drive shaft (34) and the pivot shaft (14), and
**in that** the prestressing element (78) is permanently coupled in a first connection area in relation to the one shaft, being axially supported on the one shaft about the pivot axis (A) in the circumferential direction and is permanently coupled in a second connection area in relation to the coupling device (36), being axially supported on the coupling device (36) about the pivot axis (A) in the circumferential direction.

2. Exhaust gas flap in accordance with claim 1, **characterized in that** the first connection area comprises a first winding end section (82) extending in a first axial end area (84) of the prestressing element (76), and that the second connection area comprises a second winding end section (86) extending in a second axial end area (88) of the prestressing element (78).

3. Exhaust gas flap in accordance with claim 2, **characterized in that** the prestressing element (78) comprises in the first winding end section (82) a first connection projection (90), which extends essentially axially and meshes with a connection recess (92) of the one shaft, and that the prestressing element (78) comprises in the second winding end section (86) a second connection projection (94), which extends essentially axially and meshes with a connection recess (96) of the coupling device (36).

4. Exhaust gas flap in accordance with one of the claims 1 to 3, **characterized in that** the prestressing element (78) comprises at least one winding, preferably a plurality of windings (80).

5. Exhaust gas flap in accordance with one of the above claims, **characterized in that** in the first coupling area (42), the coupling device (36) has a first positive-locking meshing opening (48) with a meshing opening cross-sectional geometry and the drive shaft (34) has a positive-locking meshing end (50), which meshes with the first positive-locking meshing opening (48) and which has a meshing end cross-sectional geometry complementary to the meshing opening cross-sectional geometry of the first positive-locking meshing opening (48), and that in the second coupling area (44), the coupling device (36) has a second positive-locking meshing opening (95) with a meshing opening cross-sectional geometry and the pivot shaft (14) has a positive-locking meshing end (96) that meshes with the second positive-locking meshing opening (95) and that has a meshing end cross-sectional geometry complementary to the meshing opening cross-sectional geometry of the second positive-locking meshing opening (95).

6. Exhaust gas flap in accordance with claim 5, **characterized in that** the positive-locking meshing end (50) of the one shaft has an essentially cylindrical configuration in the direction of the pivot axis (A), and that the positive-locking meshing end (96) of the other shaft is configured as tapering towards the one shaft in the direction of the pivot axis (A).

7. Exhaust gas flap in accordance with one of the above claims, **characterized in that** the coupling device (36) and the prestressing element (78) are carried on the one shaft in a manner secured against detachment from the one shaft, or/and that the coupling device (36) is prestressed or can be prestressed by the prestressing element (78) into an assembly preparation position on the one shaft.

8. Exhaust gas flap in accordance with one of the above claims, **characterized in that** at least one locking projection (74, 76), which meshes with a locking recess (70, 72) on the one shaft and locks the coupling device (36) on the one shaft in an assembly preparation position, is provided on the coupling device (36).

9. Exhaust gas flap in accordance with claim 8, **characterized in that** at least one receiving recess (62, 64) is provided on the one shaft, wherein the locking projection (76, 76) can be moved through the receiving recess (62, 64) for accommodation in the locking recess (70, 72) associated with this locking projection.

10. Exhaust gas flap in accordance with claim 9, **characterized in that** the locking recess (70, 72) accommodating the at least one locking projection (74, 76) and the receiving recess (62, 64) provided for moving through the locking projection (74, 76) are offset in relation to one another in the circumferential direction about the pivot axis (A), or/and that the at least one locking projection (74, 76) can be displaced essentially in the direction of the pivot axis (A) in the locking recess (70, 72) accommodating this locking projection and in the receiving recess (62, 64) provided for moving through the locking projection (74, 76).

11. Exhaust gas flap in accordance with one of the above claims, **characterized in that** the one shaft is the drive shaft (34) and the other shaft is the pivot shaft (14).

12. Exhaust gas flap in accordance with one of the above claims, **characterized in that** the coupling device (36) comprises a coupling element (46), which has an essentially plate-shaped configuration in the first coupling area (42) and in the second coupling area (44) and is aligned essentially at right angles to the pivot axis (A).

13. Exhaust gas flap in accordance with claim 12, **characterized in that** the coupling device (36) has coupling element end areas that are arranged overlapping one another in at least one of the coupling areas (42, 44).

## Revendications

1. Clapet de gaz d'échappement, en particulier pour le flux de gaz d'échappement d'un moteur à combustion interne, comprenant :
- un tube de clapet (12),
- un diaphragme de clapet (16), qui est porté à l'intérieur du tube de clapet (12) sur un arbre de pivotement (14) pouvant tourner autour d'un axe de pivotement (A), un entraînement de pivotement (30) pour l'arbre de pivotement (14),
- un dispositif d'accouplement (36) couplant l'arbre de pivotement (14) à un arbre d'entraînement (34) de l'entraînement de pivotement (29) [sic - (30) - Tr.Ed.] pour une rotation conjointe autour de l'axe de pivotement (A), le dispositif d'accouplement (36) comprenant une première zone d'accouplement (42) qui est dans un état d'accouplement rotatif à engagement positif avec l'arbre d'entraînement (34) et une deuxième zone d'accouplement (44) qui est dans un état d'accouplement rotatif à engagement positif avec l'arbre de pivotement (14),
- un élément de précontrainte (78), qui est supporté par rapport au dispositif d'accouplement (36), d'une part, et par rapport audit un arbre de l'arbre d'entraînement (34) et de l'arbre de pivotement (14), d'autre part, dans lequel l'élément de précontrainte (78) comprend un ressort hélicoïdal et le dispositif d'accouplement (36) est précontraint axialement par l'élément de précontrainte (78) dans la direction de l'arbre de pivotement (14) envers l'autre arbre de l'arbre d'entraînement (34) et de l'arbre de pivotement (14),
**caractérisé en ce que**
le dispositif d'accouplement (36) est précontraint par l'élément de précontrainte (78) autour de l'axe de pivotement (A) par rapport audit un arbre de l'arbre d'entraînement (34) et de l'arbre de pivotement (14), et
**en ce que** l'élément de précontrainte (78) est couplé de manière permanente dans une première zone de raccordement par rapport audit un arbre, en s'appuyant axialement sur ledit un arbre autour de l'axe de pivotement (A) dans la direction circonférentielle, et est couplé de manière permanente dans une deuxième zone de raccordement par rapport au dispositif d'accouplement (36), en s'appuyant axialement sur le dispositif d'accouplement (36) autour de l'axe de pivotement (A) dans la direction circonférentielle.

2. Clapet de gaz d'échappement selon la revendication 1, **caractérisé en ce que** la première zone de raccordement comprend une première section d'extrémité d'enroulement (82) s'étendant dans une première zone d'extrémité axiale (84) de l'élément de précontrainte (76), et **en ce que** la deuxième zone de raccordement comprend une deuxième section d'extrémité d'enroulement (86) s'étendant dans une deuxième zone d'extrémité axiale (88) de l'élément de précontrainte (78).

3. Clapet de gaz d'échappement selon la revendication 2, **caractérisé en ce que** l'élément de précontrainte (78) comprend dans la première section d'extrémité d'enroulement (82) une première saillie de raccordement (90), qui s'étend essentiellement axialement et s'engrène avec un évidement de raccordement (92) dudit un arbre, et **en ce que** l'élément de précontrainte (78) comprend dans la deuxième section d'extrémité d'enroulement (86) une deuxième saillie de raccordement (94), qui s'étend essentiellement axialement et s'engrène avec un évidement de raccordement (96) du dispositif d'accouplement (36).

4. Clapet de gaz d'échappement selon l'une des revendications 1 à 3, **caractérisé en ce que** l'élément de précontrainte (78) comprend au moins un enroulement, de préférence une pluralité d'enroulements (80).

5. Clapet de gaz d'échappement selon l'une des revendications précédentes, **caractérisé en ce que** le dispositif d'accouplement (36) présente dans la première zone d'accouplement (42) une première ouverture d'engrènement à engagement positif (48) avec une géométrie de section transversale d'ouverture d'engrènement et l'arbre d'entraînement (34) présente une extrémité d'engrènement à engagement positif (50) qui s'engrène avec la première ouverture d'engrènement à engagement positif (48) avec une géométrie de section transversale d'extrémité d'engrènement complémentaire à la géométrie de section transversale d'ouverture d'engrènement de la première ouverture d'engrènement à engagement positif (48), et que dans la deuxième zone d'accouplement (44), le dispositif d'accouplement (36) présente une deuxième ouverture d'engrènement à engagement positif (95) avec une géométrie de section transversale d'ouverture d'engrènement et l'arbre de pivotement (14) présente une extrémité d'engrènement à engagement positif (96) qui s'engrène avec la deuxième ouverture d'engrènement à engagement positif (95) avec une géométrie de section transversale d'extrémité d'engrènement complémentaire à la géométrie de section transversale d'ouverture d'engrènement de la deuxième ouverture d'engrènement à engagement positif (95).

6. Clapet de gaz d'échappement selon la revendication 5, **caractérisé en ce que** l'extrémité d'engrènement à engagement positif (50) dudit un arbre a une configuration essentiellement cylindrique dans la direction de l'axe de pivotement (A), et **en ce que** l'extrémité d'engrènement à engagement positif (96) de l'autre arbre est configurée comme se rétrécissant vers l'un des arbres dans la direction de l'axe de pivotement (A).

7. Clapet de gaz d'échappement selon l'une des revendications précédentes, **caractérisé en ce que** le dispositif d'accouplement (36) et l'élément de précontrainte (78) sont montés sur ledit un arbre de manière à ne pas pouvoir se détacher dudit un arbre, et/ou **en ce que** le dispositif d'accouplement (36) est précontraint ou peut être précontraint par l'élément de précontrainte (78) dans une position de préparation au montage sur ledit un arbre.

8. Clapet de gaz d'échappement selon l'une des revendications précédentes, **caractérisé en ce qu'**il est prévu sur le dispositif d'accouplement (36) au moins une saillie de verrouillage (74, 76) qui s'engrène dans un évidement de verrouillage (70, 72) sur ledit un arbre et qui verrouille le dispositif d'accouplement (36) sur ledit un arbre dans une position de préparation au montage.

9. Clapet de gaz d'échappement selon la revendication 8, **caractérisé en ce qu'**au moins un évidement de réception (62, 64) est prévu sur ledit un arbre, dans lequel la saillie de verrouillage (76, 76) peut être déplacée à travers l'évidement de réception (62, 64) pour être reçue dans l'évidement de verrouillage (70, 72) associé à cette saillie de verrouillage.

10. Clapet de gaz d'échappement selon la revendication 9, **caractérisé en ce que** l'évidement de verrouillage (70, 72) recevant ladite au moins une saillie de verrouillage (74, 76) et l'évidement de réception (62, 64) prévu pour le déplacement à travers la saillie de verrouillage (74, 76) sont décalés l'un par rapport à l'autre dans la direction circonférentielle autour de l'axe de pivotement (A), ou/et que ladite au moins une saillie de verrouillage (74, 76) peut être déplacée essentiellement dans la direction de l'axe de pivotement (A) dans l'évidement de verrouillage (70, 72) recevant cette saillie de verrouillage et dans l'évidement de réception (62, 64) prévu pour le passage de la saillie de verrouillage (74, 76).

11. Clapet de gaz d'échappement selon l'une des revendications précédentes, **caractérisé en ce que** ledit un arbre est l'arbre d'entraînement (34) et l'autre arbre est l'arbre de pivotement (14).

12. Clapet de gaz d'échappement selon l'une des revendications précédentes, **caractérisé en ce que** le dispositif d'accouplement (36) comprend un élément d'accouplement (46), qui a une configuration essentiellement en forme de plaque dans la première zone d'accouplement (42) et dans la deuxième zone d'accouplement (44) et est orienté essentiellement à angle droit par rapport à l'axe de pivotement (A).

13. Clapet de gaz d'échappement selon la revendication 12, **caractérisé en ce que** le dispositif d'accouplement (36) présente des zones d'extrémité de l'élément d'accouplement qui sont disposées en se chevauchant dans au moins une des zones d'accouplement (42, 44).
